# EUROPÄISCHE PATENTANMELDUNG

(11) **EP 1 571 236 A1**
(43) Veröffentlichungstag der Anmeldung: **07.09.2005**
(21) Anmeldenummer: 04004894.4
(22) Anmeldetag: 02.03.2004
(51) Int. Cl.: C23C 22/00, C25D 11/00, C23F 1/00, F01D 5/00

(54) **Verfahren zur Oberflächenumwandlung eines Bauteils**

(71) Anmelder: SIEMENS AKTIENGESELLSCHAFT, 80333 München (DE)
(72) Erfinder: Bast, Ulrich, Dr., 81667 München (DE); Kobusch, Manfred, 81739 München (DE); Ott, Michael, Dr., 45478 Mülheim (DE); Rothenfusser, Max, 81377 München (DE)

(57) **Zusammenfassung**

Bauteile, die der Korrosion unterliegen, werden oft wieder aufgearbeitet. Vorher müssen jedoch die Korrosionsprodukte entfernt werden. Dabei wird jedoch auch die Zusammensetzung des Bauteils verändert, weil das Korrosionsprodukt dem Bauteil Elemente entzogen hat. Diese müssen dann wieder hinzugefügt werden.

Das erfindungsgemäße Verfahren beinhaltet die Korrosionsprodukte in Metall umzuwandeln, so dass dem Bauteil (10) keine Anteile an Elementen entzogen werden.

## Beschreibung

Die Erfindung betrifft ein Verfahren zur Oberflächenumwandlung eines Bauteils gemäß Anspruch 1 und ein Verfahren zur Entfernung einer Schicht eines nach Anspruch 1 behandelten Bauteils gemäß Anspruch 23.

Bauteile (Substrate) für Hochtemperaturanwendungen sind oft nach ihrem Einsatz beispielsweise in Form von Korrosionsschichten durch Korrosion oder durch Oxidation geschädigt, auch wenn auf diesen Bauteilen eine metallische Schutzschicht und/oder eine keramische Wärmedämmschicht vorhanden war.

Solche Bauteile sind beispielsweise Turbinenschaufeln, Brennkammerauskleidungen sowie weitere Gehäuseteile einer Turbine (stationär, Flugzeug), wie z.B. einer Gas- oder Dampfturbine.

Um die Kosten für den Betrieb einer Turbine zu senken, werden die teuren Substrate solcher Bauteile nach einer bestimmten Einsatzdauer wieder aufgearbeitet. Dabei werden gegebenenfalls aufgebrachte Schichten und Korrosionsschichten bzw. Reaktionsprodukte, die sich im Betrieb gebildet haben, z.B. durch Säurestrippen entfernt.

Ebenso können sich im Substrat Risse gebildet haben, die ebenfalls korrodiert sind. Solche Risse müssen repariert werden, bevor das Bauteil wieder eingesetzt werden kann. Dies kann dadurch geschehen, dass ein Bereich um den Riss abgetragen wird und dieser Bereich durch einen Einsatz ersetzt wird, der angelötet oder angeschweißt wird oder durch Laserauftragsschweißen komplett aufgefüllt wird. Oft ist jedoch erwünscht, dass der Riss nur mit einem Lot gefüllt oder zugeschweißt wird. Dabei muss dann der Riss frei von Verunreinigungen sein. In den Rissen hat sich jedoch oft auch eine Korrosionsschicht gebildet. Diese muss entfernt werden. Dies geschieht beispielsweise durch Fluoridionenreinigung, durch Säure- oder Salzbadstrippen.

Bei diesem Verfahren wird das gesamte Korrosionsprodukt aus Metall, das dem Substrat entzogen wurde, und Nichtmetall, d.h. Oxid, Sulfid, Phosphorid usw., entfernt.

Oft braucht das Substrat nicht repariert zu werden, da dieses ausreichend geschützt war, sondern eine vorhandene, verbrauchte Schutzschicht soll entfernt werden.
Auf der Schutzschicht hat sich in gewünschter Weise eine schützende Oxidschicht mit einem Element (beispielsweise Al) der Schutzschicht gebildet. Dadurch entstehen beispielsweise bei den aluminiumhaltigen Schichten aluminiumarme Zonen, da sich Aluminiumoxid gebildet hatte. Diese an dem jeweiligen Metall (hier Al) verarmten Zonen sind aber durch Säurestrippen schlechter entfernbar, da die an Al verarmten Zonen säureresistenter sind. Daher muss entweder diese verarmte Zone sehr aufwändig entfernt werden oder Aluminium in einem zusätzlichen Arbeitsschritt neu aufgebracht und wieder eindiffundiert werden, damit dann ein Säurestrippen vonstatten gehen kann.

Es ist daher Aufgabe der Erfindung ein Verfahren aufzuzeigen, bei dem die oben genannten Probleme überwunden werden.

Die Aufgabe wird gelöst durch ein Verfahren zur Oberflächenumwandlung von Bauteilen gemäß Anspruch 1, bei dem das Korrosionsprodukt aus einem Metall und einem Nichtmetall in Metall umgewandelt wird, wobei das Metall an der Oberfläche des Bauteils verbleibt.

Dadurch ergibt sich auch ein vorteilhaftes Verfahren nach Anspruch 23, wenn ein Bauteil an seiner Oberfläche oder an einer Oberfläche seiner Schicht durch Korrosion an einem Metallelement verarmt ist und so eine erhöhte Säureresistenz bewirkt, und durch die Umwandlung die Verarmung rückgängig gemacht wird, so dass die Säureresistenz nicht mehr erhöht ist.

In den Unteransprüchen sind weitere vorteilhafte Maßnahmen und Verbesserungen des erfindungsgemäßen Verfahrens aufgelistet.
Die in den Unteransprüchen aufgelisteten Maßnahmen können in vorteilhafter Art und Weise miteinander kombiniert werden.

### Es zeigen

- Figur 1, 2, 3: eine Anordnung, um das erfindungsgemäße Verfahren durchzuführen,
- Figur 4, 5, 6: ein Bauteil in verschiedenen Verfahrensschritten des erfindungsgemäßen Verfahrens,
- Figur 7, 8, 9: ein weiteres Bauteil, das mit dem erfindungsgemäßen Verfahren behandelt wird,
- Figur 10: eine Gasturbine,
- Figur 11: eine Brennkammer und
- Figur 12: eine Turbinenschaufel.

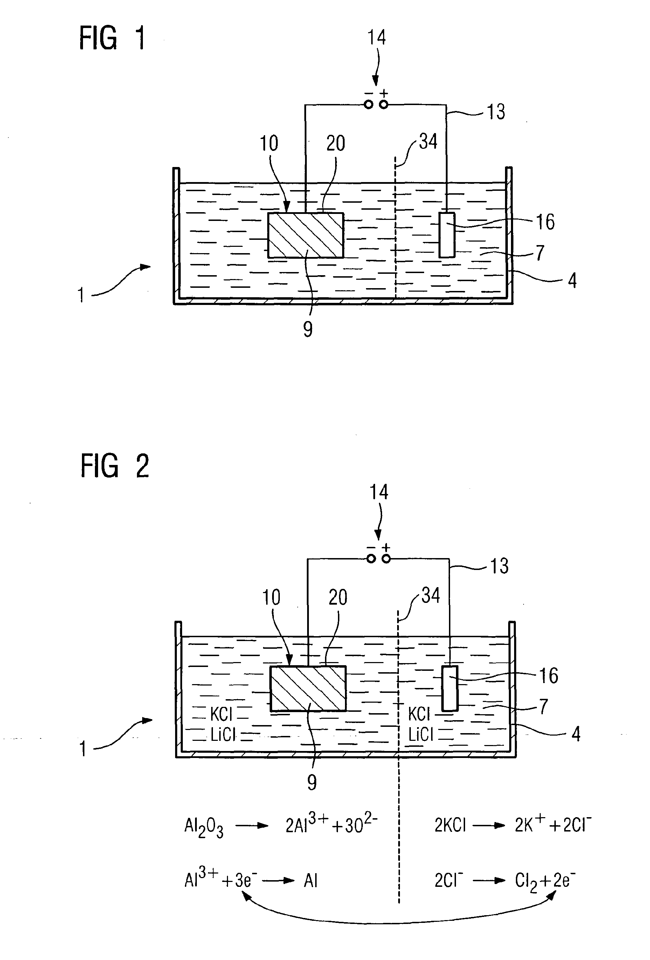

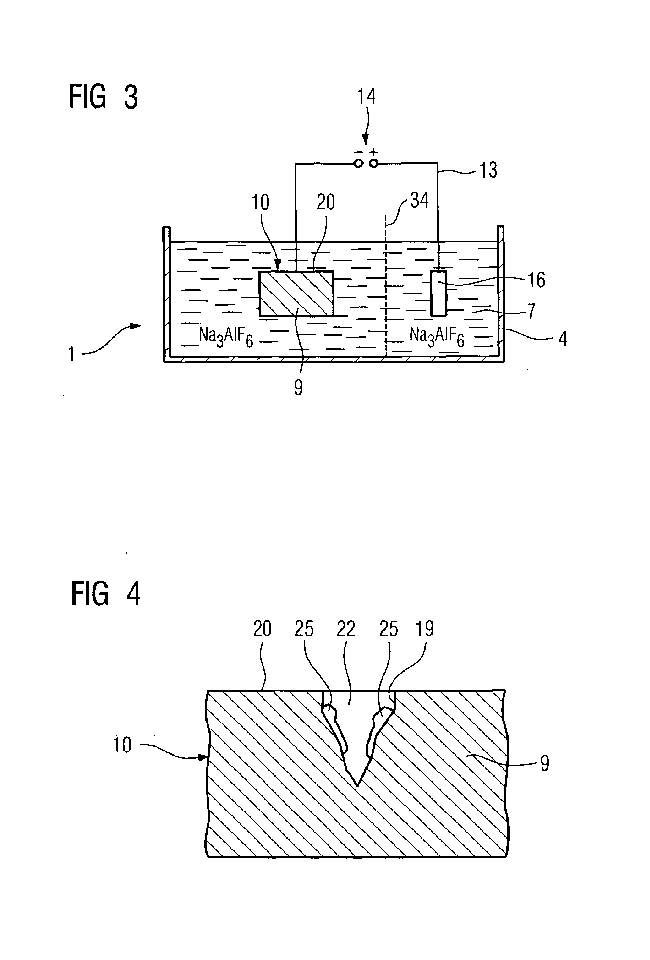

Figur 1 zeigt beispielsweise eine Anordnung 1, mit der das erfindungsgemäße Verfahren durchgeführt werden kann. Die Vorrichtung 1 besteht zumindest aus einem Behälter 4, in dem eine Flüssigkeit 7 angeordnet ist. In die Flüssigkeit 7 wird zumindest ein Korrosionsprodukt 25 (Fig. 4) eines Bauteils 10 eingebracht. Dabei ist das Bauteil 10 mindestens so weit in die Flüssigkeit 7 eingetaucht, dass das Korrosionsprodukt 25 durch die Flüssigkeit 7 benetzt wird.

Insbesondere kann auch eine Elektrode 16 in der Flüssigkeit 7 angeordnet sein, die über elektrische Verbindungsmittel 13 und eine elektrischen Spannungsquelle 14 mit dem Bauteil 10 (wirkt auch als Elektrode) verbunden ist, um eine Elektrolyse (beispielsweise Schmelzflusselektrolyse) zu ermöglichen. Zwischen Elektrode 16 und Bauteil 10 kann auch ein
Diaphragma 34 in der Flüssigkeit 7 angeordnet sein. Das Diaphragma 34 verhindert beispielsweise, dass sich Ionen (beispielsweise Cl⁻), die sich an der Elektrode 16 bilden, auf dem Bauteil 10 niederschlagen.

Die Elektrode 16 besteht beispielsweise aus Graphit und/oder Teer und/oder Tonerde.

Das Bauteil 10 weist Korrosionsprodukte 25 aus einem Metall (beispielsweise Ni, Fe, Cr, Co, Al, Ti) und einem Nichtmetall (beispielsweise O₂, N₂, S, P, C) auf, wie z.B. Aluminiumoxid und/oder Titanoxid.

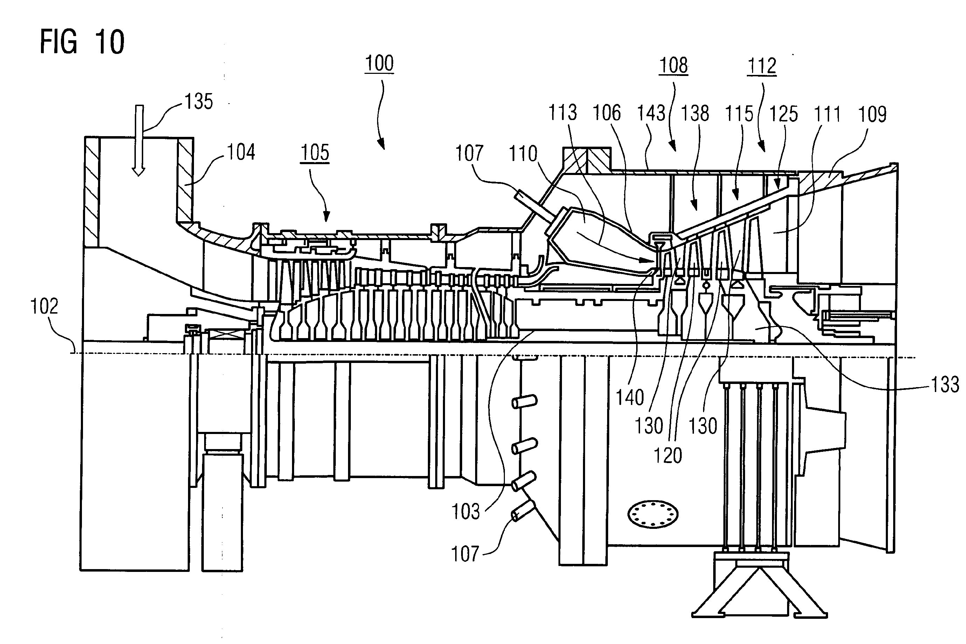

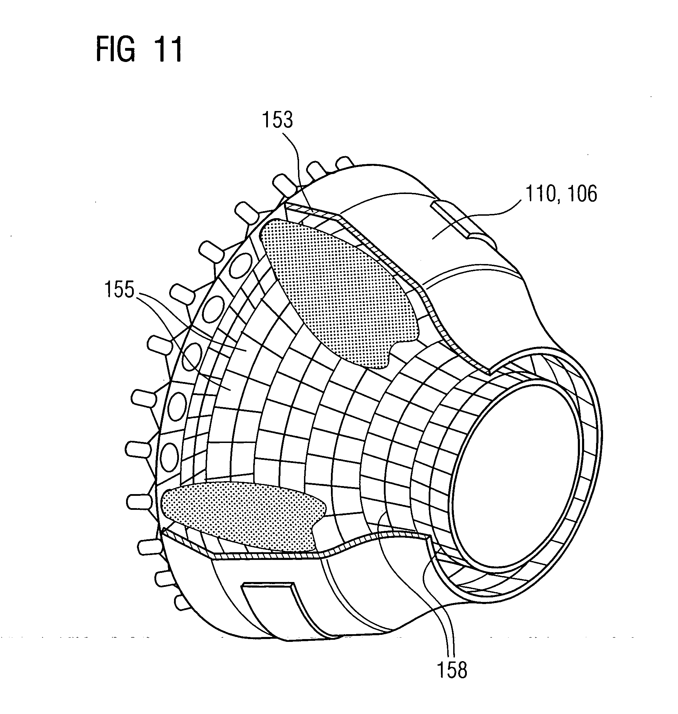

Das Bauteil 10 ist z.B. ein hochlegierter Stahl, eine Eisenbasislegierung oder eine eisen-, nickel- oder kobaltbasierte Superlegierung. Solche Bauteile 10 werden für Turbinenteile 120, 130 (Fig. 10) bei Gas 100 (Fig. 10) - und/oder Dampfturbinen verwendet, insbesondere für Turbinenschaufeln, Brennkammerauskleidungen 155 (Fig. 11) sowie andere Gehäuseteile.

Dabei wurden auf die Bauteile 10 bei der Neuherstellung eine metallische Korrosionsschutzschicht (MCrAlX) und/oder eine keramische Wärmedämmschicht aufgebracht. Während des betriebliche Einsatzes des Bauteils 10 kommt es trotz dieser Schutzschichten zu einer Schädigung des Substrats 9 des Bauteils 10, wodurch sich Korrosionsprodukte 25 (Fig. 4) und Risse 22 (Fig. 4) auf dem Bauteil 10 bilden.

Um das Bauteil 10 wieder aufzuarbeiten, werden in einem ersten Schritt beispielsweise grob die keramische Schicht und lose Teile beispielsweise durch Sandstrahlen entfernt.
Danach wird das Bauteil 10 in der Flüssigkeit 7 beispielsweise gemäß Figur 1 angeordnet.

Die Flüssigkeit 7 besteht beispielsweise aus einer Salzschmelze mit einer Temperatur von 300°C - 800°C, insbesondere von 500°C - 600°C aus den Salzen Kaliumchlorid (KC1) und/oder Lithiumchlorid (LiCl) (Fig. 2) und/oder Na₃AlF₆ (Fig. 3) (Natriumaluminiumfluorid).

Ebenso können beispielsweise wässrige Lösungen 7 von diesen oder anderen Salzen verwendet werden.

Die Salze werden insbesondere speziell auf die Korrosionsprodukte 25 abgestimmt.
Bei Superlegierungen hat sich Aluminiumoxid und/oder Titanoxid gebildet.
Kaliumchlorid und/oder Lithiumchlorid sind besonders für diese Korrosionsprodukte geeignet (Fig. 2).
Für andere Korrosionsprodukte 25 können andere Salze (z.B. Alkali- oder Erdalkalihalogenide) verwendet werden.

Ebenso kann das Salz Na₃AlF₆ verwendet werden (Fig. 3).

Das Salz oder die Salze können auch so ausgewählt werden, dass sie ein Lösungsmittel des Korrosionsprodukts 25 darstellen, d.h. das Korrosionsprodukt 25 wandelt sich durch eine thermisch bedingte Reaktion in Metall und Nichtmetall um.
Das Metall verbleibt auf der Oberfläche 19 des Bauteils 10 und das beispielsweise gasförmige Nichtmetall entweicht.

In die Behälter 4 wird als Lösungsmittel beispielsweise Na₃AlF₆ und/oder Al₂O₃ eingebracht.

Na₃AlF₆ bildet mit dem Oxid Al₂O₃ oder auch mit TiO₂ ein Eutektikum, so dass die Schmelztemperatur des Al₂O₃ herabgesetzt ist (Al₂O₃/ Na₃AlF₆ ≅ 935°C) .

In den Schmelzen aus Na₃AlF₆/Al₂O₃ löst sich dann das Korrosionsprodukt 25.

Wenn nur Na₃AlF₆ als Flüssigkeit 7 (Schmelze) verwendet wird, bildet sich lokal um das Korrosionsprodukt 25 ein Eutektiukum oder Peritektikum. Wenn Na₃AlF₆ und Al₂O₃ verwendet werden, stellt die Schmelze das Eutektikum dar. Dabei wird das Verhältnis von Na₃AlF₆ und Al₂O₃ so (beispielsweise unterstöchiometrisch)eingestellt, dass sich das Al₂O₃ in Form des Korrosionsproduktes 25 in der Schmelze 7 löst.

Weiterhin, insbesondere im Falle von Na₃AlF₆, kann noch 1 bis 10 vol% Lithiumfluorid (LiF) hinzugegeben werden.

Generell kann man Salze verwenden, die mit dem Korrosionsprodukt 25 ein Eutektikum oder Peritektikum bilden. Der Prozess kann elektrolytisch unterstützt werden.

Wenn eine Spannung zwischen dem Bauteil 10 und der Elektrode 16 vorhanden ist, wird das Korrosionsprodukt 25, beispielsweise Aluminiumoxid, reduziert, so dass sich metallisches Aluminium bildet. Das Aluminium wird auf dem Bauteil 10 abgeschieden. Das Aluminium des Korrosionsproduktes 25 kann dabei in die Schmelze oder Lösung 7 kurzfristig übergehen, wird dann aber wieder auf dem Bauteil 10 abgeschieden.

Der Sauerstoff der Oxide bzw. das Chlor oder Fluor (Halogen) der geschmolzenen oder aufgelösten Salze bilden Gase an der Anode 16. Die Reaktion bei der Elektrolyse liefert Elektronen, die mit dem durch elektrische Spannung reduzierten Al₂O₃ (Al³⁺) metallisches Aluminium (Al) bilden. Auch ein Sauerstoffionentransfer ist denkbar.

Die Spannung liegt im Bereich von 1.6 Volt bis 3.4 Volt, insbesondere nahe 3.3 Volt.

Das Aluminium wird auf dem Bauteil 10 abgeschieden. Bei dem Bauteil 10 kann es sich auch um ein an der Oberfläche 19 aluminiertes oder chromiertes Substrat 9 handeln.

Figur 4 zeigt ein Bauteil 10, das mit dem erfindungsgemäßen Verfahren behandelt wird.

Das Bauteil 10 weist in seinem Substrat 9 beispielsweise einen Riss 22 auf, in dem zumindest ein Korrosionsprodukt 25 vorhanden ist. Der Riss 22 geht von einer Oberfläche 20 des Bauteils 10 aus, so dass der Riss 22 von außen zugänglich ist. In diesen Riss 22 dringt die Flüssigkeit 7 ein und wandelt das Korrosionsprodukt 25 um.
Das Bauteil 10 kann in eine Schmelze 7 oder Lösung 7 getaucht, evakuiert und wieder belüftet werden, so dass sich der Riss 22 mit der Schmelze 7 oder der Lösung 7 (wirken als Elektrolyt) füllt.

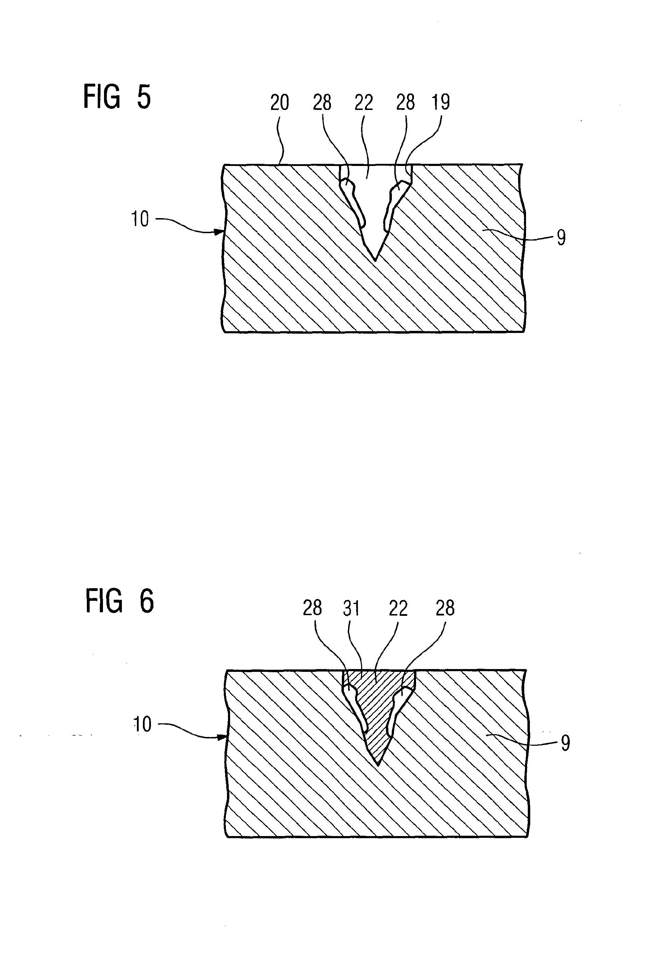

Das Korrosionsprodukt 25 in dem Riss 22 wird umgewandelt in ein Metall 28 (Fig. 5), beispielsweise in Form einer Schicht. Durch eine Diffusionswärmebehandlung wird die ursprüngliche Zusammensetzung des Substrats im oberflächennahen Bereich wiederhergestellt, weil das Metall 28 an der Oberfläche 19 die an diesem Metall verarmten Bereiche durch Diffusion "wiederauffüllt".
Dann kann der Riss 22 mit einem Lot 31 aufgefüllt (Fig. 6) oder zugeschweißt werden.

Das Lot 31 oder Schweißgut 31 kann ein Oxid oder Korrosionsprodukt nicht oder schlecht benetzen, so dass es wichtig ist, dass eine gereinigte, d.h. metallische Oberfläche vorhanden ist. Als Folge der Umwandlung des Korrosionsproduktes 25 zu einem Metall 28 findet eine gute Benetzung mit der Oberfläche 119 des Risses 22 und des Metall 28 mit dem Lot 31 statt.

Vorzugsweise wird durch eine Wärmebehandlung das Metall 28 in das Substrat 9 eindiffundiert, so dass das Substrat 9 um den Riss 22 wieder die ursprüngliche chemische Zusammensetzung und ursprünglichen mechanischen und thermischen Eigenschaften aufweist.

Gegebenenfalls kann eine Wärmebehandlung mit dem aufgefüllten Riss 22 durchgeführt werden.
Auf die Oberfläche 20 des Bauteils 10 können dann wiederum neue Schichten aufgebracht werden, um das Bauteil 10 wieder einsetzen zu können.
Eine solche neue Schicht ist z.B. eine metallische Schutzschicht des Typs MCrAlX, wobei M für zumindest ein Element der Gruppe Eisen (Fe), Kobalt (Co) und/oder Nickel (Ni) steht sowie X für das Element Yttrium und/oder zumindest ein Element der Seltenen Erden. Auf diese metallische Schutzschicht kann bei Bedarf eine keramische Wärmedämmschicht aufgebracht werden.

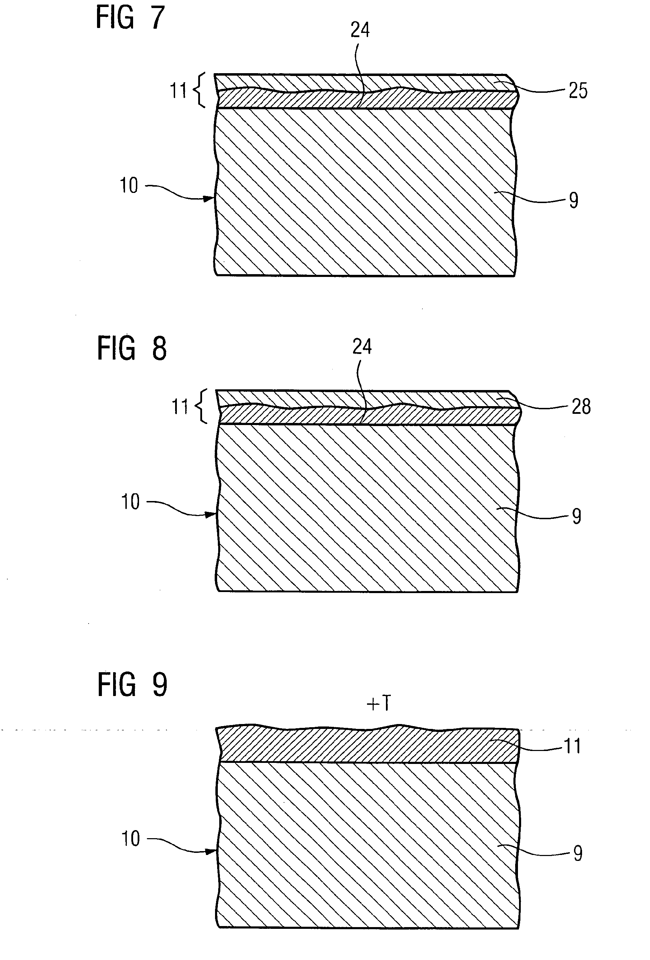

Figur 7 zeigt ein Bauteil 10 mit einer aufgebrachten Schicht 11 oder durch Diffusion entstandenen Schichtbereich 11 eines Substrats 9 (Aluminid, MCrAlX), wobei darüber noch eine Schicht aus Korrosionsprodukten 25, also eine Korrosionsschicht 25 haftet (beispielsweise Aluminiumoxid).

Diese Schicht 11 ist durch die Oxidation beispielsweise an Aluminium verarmt, was eine erhöhte Abtragungsresistenz der Schicht 11 zur Folge hat.

Dies ist nachteilig, wenn die Aluminidschicht 11 durch Säure oder andere Verfahren (Fluorionenreinigung (FIC) entfernt werden soll.

Durch eine erfindungsgemäße Behandlung in der Vorrichtung 1 gemäß Figur 1 wird die Korrosionsschicht 25 in eine metallische Schicht 28 (Fig. 8) umgewandelt.
Durch eine Wärmebehandlung kann das Metall 28, beispielsweise Aluminium oder Titan, wieder in das Bauteil 10 eindiffundieren, und wiederum die ursprüngliche aluminiumreiche Schicht 11 (Fig. 9) bilden, die wieder als Schutz gegenüber Korrosion oder Oxidation dient oder besser entfernt werden kann.

Die Figur 10 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist bspw. aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 bspw. mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen und führen zu oben (Fig. 4) beschriebenen Schädigungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden bspw. eisen-, nickel- oder kobaltbasierte Superlegierungen verwendet.

Solche Superlegierungen sind bspw. aus der EP 1204776, EP 1306454, EP 1319729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 11 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

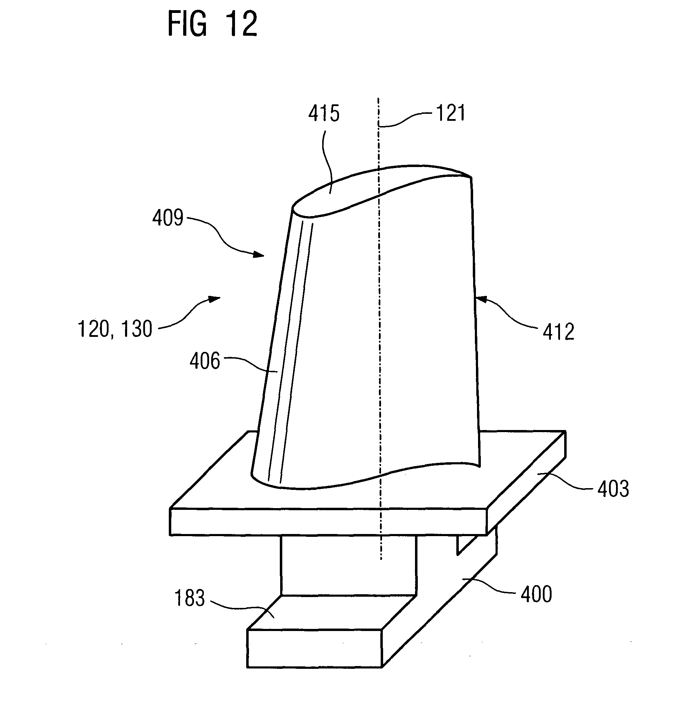

Figur 12 zeigt in perspektivischer Ansicht eine Schaufel 120, 130, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.

Die Schaufeln 120, 130 weisen entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist bspw. als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 bspw. massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf. Als Schutz gegen Korrosion weist die Schaufel 120, 130 bspw. entsprechende meistens metallische Beschichtungen auf und als Schutz gegen Wärme meistens noch eine keramische Beschichtung.

## Patentansprüche

1. Verfahren zur Oberflächenumwandlung eines Bauteils (10), das an der Oberfläche (19) zumindest ein Korrosionsprodukt (25) aufweist,
wobei das Korrosionsprodukt (25) aus einem Metall und einem Nichtmetall besteht,
**dadurch gekennzeichnet,**
**dass** das Korrosionsprodukt (25) in ein Metall (28) umgewandelt wird,
das (28) auf der Oberfläche (19) des Bauteils (10) verbleibt.

2. Verfahren nach Anspruch 1,
**dadurch gekennzeichnet, dass**
das Metall (28) ausgewählt wird aus der Gruppe: Nickel, Eisen, Chrom, Kobalt, Aluminium oder Titan.

3. Verfahren nach Anspruch 1,
**dadurch gekennzeichnet, dass**
das Nichtmetall ausgewählt wird aus der Gruppe: Sauerstoff, Stickstoff, Schwefel, Kohlenstoff oder Phosphor.

4. Verfahren nach Anspruch 1,
**dadurch gekennzeichnet, dass**
das zumindest eine Korrosionsprodukt (25) mit einem Salz in Kontakt gebracht wird, um das Korrosionsprodukt (25) in Metall (28) umzuwandeln.

5. Verfahren nach Anspruch 1 oder 4,
**dadurch gekennzeichnet, dass**
zumindest das Korrosionsprodukt (25) in eine Schmelze (7) des Salzes eingebracht wird, um das Korrosionsprodukt (25) in Metall (28) umzuwandeln.

6. Verfahren nach Anspruch 1 oder 4,
**dadurch gekennzeichnet, dass**
zumindest das Korrosionsprodukt (25) in eine Lösung (7) des Salzes eingebracht wird, um das Korrosionsprodukt (25) in Metall (28) umzuwandeln.

7. Verfahren nach Anspruch 4, 5 oder 6,
**dadurch gekennzeichnet, dass**
das Korrosionsprodukt (25) mit Kaliumchlorid (KCl) und/oder Lithiumchlorid (LiCl) in Kontakt gebracht wird, um das Korrosionsprodukt (25) in Metall (28) umzuwandeln.

8. Verfahren nach Anspruch 4, 5, 6 oder 7,
**dadurch gekennzeichnet, dass**
das Korrosionsprodukt (25) mit Na₃AlF₆ in Kontakt gebracht wird,
um das Korrosionsprodukt (25) in Metall (28) umzuwandeln.

9. Verfahren nach Anspruch 5, 7 oder 8,
**dadurch gekennzeichnet, dass**
die Salzschmelze eine Temperatur von 300°C - 800°C aufweist.

10. Verfahren nach Anspruch 5, 7 oder 8,
**dadurch gekennzeichnet, dass**
die Salzschmelze eine Temperatur von 500°C - 600°C aufweist.

11. Verfahren nach Anspruch 6, 7 oder 8
**dadurch gekennzeichnet, dass**
die Temperatur der Lösung (7) des Salzes auf eine Temperatur deutlich höher als die Raumtemperatur erhöht wird.

12. Verfahren nach Anspruch 1 oder 4,
**dadurch gekennzeichnet, dass**
das Korrosionsprodukt (25) mit einem Lösungsmittel in Kontakt gebracht wird,
das das Korrosionsprodukt (25) auflöst und das insbesondere ein Eutektikum oder ein Peritektikum mit dem Korrosionsprodukt (25) bildet.

13. Verfahren nach Anspruch 12,
**dadurch gekennzeichnet, dass**
das Lösungsmittel aus Na₃AlF₆ und/oder Al₂O₃ besteht.

14. Verfahren nach Anspruch 7, 8, 12 oder 13,
**dadurch gekennzeichnet, dass**
Lithiumfluorid (LiF), insbesondere zu dem Lösungsmittel, hinzugegeben wird.

15. Verfahren nach Anspruch 5, 6 oder 12,
**dadurch gekennzeichnet, dass**
in der Lösung (7) oder der Schmelze (7) zumindest eine Elektrode (16) angeordnet ist
und zwischen dem Bauteil (10) und der Elektrode (16) eine elektrische Spannung angelegt wird,
um eine Elektrolyse durchzuführen.

16. Verfahren nach Anspruch 15,
**dadurch gekennzeichnet, dass**
die elektrische Spannung zwischen 1.6 und 3.4 Volt, insbesondere etwa bei 3.3 Volt,
beträgt.

17. Verfahren nach Anspruch 15,
**dadurch gekennzeichnet, dass**
ein Diaphragma (34) in der Lösung (7) oder der Schmelze (7) zwischen dem Bauteil (10) und der Elektrode (16) vorhanden ist.

18. Verfahren nach Anspruch 1,
**dadurch gekennzeichnet, dass**
das Bauteil (10) eine Turbinenschaufel (120, 130), eine Auskleidung (155) einer Brennkammer (110),
einer Gasturbine (100) oder Dampfturbine ist.

19. Verfahren nach Anspruch 18,
**dadurch gekennzeichnet, dass**
das Bauteil (10) wieder aufgearbeitet wird
und mit neuen Schichten versehen wird.

20. Verfahren nach Anspruch 1, 18 oder 19,
**dadurch gekennzeichnet,**
**dass** das Bauteil (10) einen Riss (22) mit
Korrosionsprodukten (25) aufweist,
die (25) in Metall umgewandelt werden, und
**dass** der Riss (22) insbesondere mit einem Lot aufgefüllt wird.

21. Verfahren nach Anspruch 1,
**dadurch gekennzeichnet, dass**
durch eine Wärmebehandlung die in Metall (28) umgewandelte Korrosionsschicht (25) in eine Schicht aus diesem Metall (28) umgewandelt wird.

22. Verfahren nach Anspruch 1,
**dadurch gekennzeichnet, dass**
das Substrat (9) des Bauteils (10) im oberflächennahen Bereich (24) mit dem aus dem Korrosionsprodukt (25) umgewandelten Metall (28) angereichert wird.

23. Verfahren zur Entfernung einer Schicht eines Bauteils (10),
die mittels eines Verfahrens nach einem oder mehreren der Ansprüche 1 bis 22 umgewandelt wurde,
wobei die Schicht in einer Säure entfernt wird.
